# FASCICULE DE BREVET EUROPEEN

(11) **EP 4 556 124 B1**
(45) Date de publication et mention de la délivrance du brevet: **18.03.2026**
(21) Numéro de dépôt: 24209933.1
(22) Date de dépôt: 30.10.2024
(51) Int. Cl.: B05B 12/06, B05B 1/00, B05B 1/30, B08B 5/02, B08B 3/02, F15B 21/12, B05B 12/00, B05B 12/08, B05B 1/20, B05B 12/14

(54) **SYSTÈME DE GÉNÉRATION D'IMPULSIONS POUR UNE ALIMENTATION EN FLUIDE DE TRAVAIL PULSÉ, ET MACHINE INDUSTRIELLE COMPRENANT UN TEL SYSTÈME**
PULSERZEUGUNGSSYSTEM FÜR EINE GEPULSTE ARBEITSFLUIDVERSORGUNG UND INDUSTRIELLE MASCHINE MIT SOLCH EINEM SYSTEM
PULSE GENERATION SYSTEM FOR A PULSED WORKING FLUID SUPPLY, AND INDUSTRIAL MACHINE COMPRISING SUCH A SYSTEM

(30) Priorité: 15.11.2023 FR 2312501
(43) Date de publication de la demande: 21.05.2025
(73) Titulaire: Ridel, 76270 Neufchâtel-en-Bray (FR)
(72) Inventeur: RIDEL, Philippe, 76270 Neufchâtel-en-Bray (FR)
(74) Mandataire: Cabinet Chaillot

(56) Documents cités:
- WO-A1-2016/063499
- WO-A1-2022/090996
- US-A- 5 884 894
- US-A1- 2022 034 698

## Description

La présente invention concerne le domaine technique des systèmes d'alimentation en fluide de travail, et porte plus particulièrement sur un système de génération d'impulsions pour une alimentation en fluide de travail pulsé, et une machine industrielle comprenant un tel système.

Il existe déjà des systèmes destinés à générer des impulsions de fluide de travail, par exemple d'air comprimé. La demande de brevet WO2016063499 A1 divulgue par exemple un dispositif de génération d'air intermittent. Cependant les systèmes existants sont généralement complexes et coûteux. De plus, avec les systèmes existants, il est souvent compliqué de garantir une fiabilité de fonctionnement à des fréquences d'impulsions élevées, et de faire varier la fréquence et la pression à chaque impulsion.

Par conséquent, les solutions de l'art antérieur proposées pour les système d'alimentation en fluide de travail présentent toujours des inconvénients et des améliorations sont possibles.

US 2022/034698 A1 décrit un système de dosage pour le dosage d'une substance à doser.

La présente invention vise notamment à résoudre les problèmes indiqués ci-dessus en proposant un système de génération d'impulsions pour une alimentation en fluide de travail pulsé ayant une structure simple et permettant un fonctionnement fiable à des fréquences élevées, et une machine industrielle comprenant un tel système.

Ainsi, la présente invention a pour objet un système de génération d'impulsions pour une alimentation en fluide de travail pulsé, caractérisé par le fait que le système comprend : une canalisation, comprenant une extrémité d'entrée et une extrémité de sortie par laquelle est délivré du fluide de travail pulsé ; une source de fluide de travail sous pression, raccordée de manière fluidique à l'extrémité d'entrée de la canalisation ; une vanne à siège incliné, raccordée de manière fluidique sur la canalisation entre l'extrémité d'entrée et l'extrémité de sortie, la vanne à siège incliné comprenant un piston mobile entre une première position de fin de course, dans laquelle le piston ferme complètement la canalisation, et une seconde position de fin de course, dans laquelle le piston ouvre la canalisation avec une ouverture maximale de la vanne à siège incliné ; une source de fluide de commande sous pression ; un régulateur de pression, raccordé de manière fluidique à la source de fluide de commande sous pression et configuré pour ajuster une pression du fluide de commande ; une vanne de commande à trois voies et deux positions, une première voie de la vanne de commande est raccordée au régulateur de pression, une deuxième voie de la vanne de commande est raccordée à la vanne à siège incliné et une troisième voie de la vanne de commande est raccordée à une sortie de fluide de commande, la vanne de commande à trois voies et deux positions étant configurée pour commander un déplacement du piston de la vanne à siège incliné jusqu'à toute position entre la première position de fin de course et la seconde position de fin de course, incluses, à l'aide du fluide de commande ajusté en pression par le régulateur de pression ; et un dispositif de commande en liaison de communication avec le régulateur de pression et la vanne de commande à trois voies et deux positions, le dispositif de commande étant configuré pour commander le régulateur de pression en fonction d'amplitudes d'impulsion souhaitées et pour commander la vanne de commande à trois voies et deux positions en fonction de fréquences d'impulsion souhaitées, de manière à déplacer de manière proportionnelle le piston de la vanne à siège incliné et à générer des impulsions de fluide de travail pulsé.

Cette configuration permet d'obtenir un système de génération d'impulsions pour une alimentation en fluide de travail pulsé, configuré pour générer des impulsions de fluide de travail pulsé, qui a une structure simple et permet un fonctionnement fiable à des fréquences élevées.

Le système de génération d'impulsions selon l'invention peut comprendre plusieurs vannes à siège incliné en série sur la canalisation selon le type précédent, chaque vanne à siège incliné ayant sa source de fluide de commande sous pression, un régulateur de pression, raccordé de manière fluidique à la source de fluide de commande sous pression et une vanne de commande à trois voies et deux positions, les différentes vannes à siège incliné étant commandées de manière synchronisée par l'intermédiaire du dispositif de commande.

Selon un mode de réalisation particulier, la vanne de commande à trois voies et deux positions est l'une parmi une vanne tout ou rien trois voies et un distributeur 3/2.

Ces types de vanne permettent notamment un fonctionnement du système à des fréquences élevées.

On comprendra qu'une vanne tout ou rien trois voies peut, par exemple, être une vanne tout ou rien trois voies comprenant un servomoteur actionnant une tige comprenant un obturateur. On comprendra également que le distributeur 3/2 peut, par exemple, être choisi parmi un distributeur à commande électrique, un distributeur à commande électromagnétique et un distributeur à commande hydraulique. On comprendra aussi que dans le cas d'un distributeur à commande électromagnétique ou d'un distributeur à commande hydraulique, le dispositif de commande comprend des moyens de commande électromagnétiques ou des moyens de commande hydrauliques configurés pour commander le distributeur 3/2.

Selon un mode de réalisation particulier, la vanne à siège incliné est de type normalement fermée et est commandée en ouverture à l'aide du fluide de commande, de telle sorte que la première position de fin de course du piston est une position de repos.

On comprendra que l'utilisation d'une vanne à siège incliné de type normalement fermée permet notamment d'améliorer la sécurité et la fiabilité d'utilisation du système. On comprendra cependant que, selon des variantes non préférées, une vanne à siège incliné de type normalement ouverte ou une vanne à siège incliné commandée à la fois en ouverture et en fermeture à l'aide du fluide de commande pourrait également être utilisée. On comprendra aussi que dans ce dernier cas, la vanne de commande doit également être choisie pour permettre de commander l'ouverture et la fermeture de la vanne à siège incliné.

Selon un mode de réalisation particulier, le système comprend en outre un capteur de pression disposé au niveau de l'extrémité de sortie de la canalisation, le capteur de pression étant configuré pour mesurer une pression du fluide de travail et être en liaison de communication avec le dispositif de commande.

Selon un mode de réalisation particulier, le système est un système à rétroaction et le dispositif de commande est configuré pour ajuster la commande du régulateur de pression en fonction des mesures de pression reçues en provenance du capteur de pression.

On comprendra que cette configuration permet d'améliorer la précision de la pression des impulsions de fluide de travail générées.

Selon un mode de réalisation particulier, le dispositif de commande comprend des moyens de mémoire et est en outre configuré pour réaliser un apprentissage automatique concernant la commande du régulateur de pression en fonction des mesures de pression du capteur de pression, afin de, en utilisation, prédire une commande du régulateur de pression plus précise pour une amplitude d'impulsion souhaitée.

On comprendra que cette configuration permet notamment de calibrer le système et de prendre en compte des particularités, par exemple dimensionnelles, de l'installation, de manière à réduire un besoin de rétroaction une fois l'apprentissage automatique effectué. On comprendra aussi que cette configuration est particulièrement adaptée dans le cas où le système est destiné à être vendu en kit et assemblé par un utilisateur, par exemple pour un montage en rattrapage sur une installation existante.

Selon un mode de réalisation particulier, le dispositif de commande comprend un automate programmable.

Selon un mode de réalisation particulier, le régulateur de pression est un régulateur de pression analogique.

On comprendra que l'utilisation d'un régulateur de pression analogique permet notamment un ajustement très précis et rapide de la pression du fluide de commande.

Selon un mode de réalisation particulier, au moins l'un parmi le fluide de travail et le fluide de commande est de l'air.

On comprendra cependant que le fluide de travail et le fluide de commande pourraient être d'autres fluides. Par exemple, le fluide de travail pourrait être de l'eau. Par exemple toujours, le fluide de commande pourrait être de l'huile.

La présente invention a également pour objet une machine industrielle, en particulier une machine de lavage, caractérisée par le fait que la machine de lavage comprend un système selon l'invention et un organe utilisant de l'air pulsé raccordé de manière fluidique à l'extrémité de sortie dudit système, de manière à être alimentée en fluide de travail pulsé. Lorsque la machine industrielle est une machine de lavage, l'organe utilisant de l'air pulsé peut par exemple être une rampe de lavage.

On comprendra qu'une machine de lavage selon l'invention peut prendre différentes formes, par exemple une machine de lavage de pièces industrielles, par exemple pour laver des pièces industrielles après une opération d'usinage, ou encore une machine de lavage automatique de véhicules, par exemples de voitures.

Des modes de réalisation particuliers de la présente invention vont maintenant être décrits, avec référence aux dessins annexés.

Sur ces dessins :
[Fig. 1] est une représentation schématique d'un système de génération d'impulsions pour une alimentation en fluide de travail pulsé selon un mode de réalisation de l'invention.
[Fig. 2] est une représentation schématique d'une machine de lavage selon un mode de réalisation de l'invention, comprenant le système de la Figure 1.

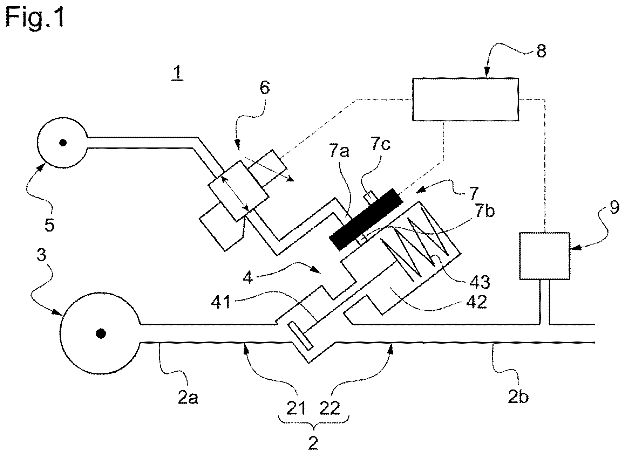

Si l'on se réfère tout d'abord à la Figure 1, on peut voir que l'on y a représenté un système 1 de génération d'impulsions pour une alimentation en fluide de travail pulsé selon un mode de réalisation de l'invention.

Le système 1 comprend une canalisation 2, une source de fluide de travail sous pression 3, une vanne à siège incliné 4, une source de fluide de commande sous pression 5, un régulateur de pression 6, une vanne de commande 7 à trois voies et deux positions, et un dispositif de commande 8.

La canalisation 2 comprend une extrémité d'entrée 2a, configurée pour admettre du fluide de travail sous pression, et une extrémité de sortie 2b, par laquelle est délivré du fluide de travail pulsé.

Selon le mode de réalisation représenté sur la Figure 1, la canalisation 2 comprend un premier élément de canalisation 21 et un second élément de canalisation 22, se présentant chacun sous la forme d'un tube cylindrique rectiligne. On comprendra cependant que, en variante, les éléments de canalisation 21, 22 pourraient se présenter sous d'autres formes, par exemple sous la forme de tuyaux flexibles.

La source de fluide de travail sous pression 3 est raccordée de manière fluidique à l'extrémité d'entrée 2a de la canalisation 2. Le fluide de travail est de préférence de l'air. On comprendra cependant qu'en variante le fluide de travail pourrait être un autre fluide, par exemple de l'eau. La source de fluide de travail sous pression peut par exemple être un compresseur, un accumulateur de pression, une ligne de fluide sous pression d'un bâtiment, par exemple une ligne d'air comprimé.

La vanne à siège incliné 4 est raccordée de manière fluidique sur la canalisation 2 entre l'extrémité d'entrée 2a et l'extrémité de sortie 2b. Selon le mode de réalisation représenté sur la Figure 1, la vanne à siège incliné 4 est raccordée entre le premier élément de canalisation 21 et le second élément de canalisation 22.

Par ailleurs, la vanne à siège incliné 4 comprend un piston 41 mobile entre une première position de fin de course, dans laquelle le piston 41 ferme complètement la canalisation, et une seconde position de fin de course, dans laquelle le piston 41 ouvre la canalisation avec une ouverture maximale de la vanne à siège incliné 4.

On comprendra que le siège de la vanne à siège incliné 4 est incliné vers l'extrémité de sortie 2b de la canalisation 2, de manière à favoriser un écoulement de fluide de l'extrémité d'entrée 2a vers l'extrémité de sortie 2b et à éviter un effet de coup de bélier.

La vanne à siège incliné 4 comprend en outre une chambre de commande 42 et un ressort 43 disposé dans la chambre de commande 42, le ressort 43 étant configuré pour solliciter le piston 41 vers une position de repos.

Selon le mode de réalisation représenté sur la Figure 1, la vanne à siège incliné 4 est de type normalement fermée et est commandée en ouverture à l'aide du fluide de commande, de telle sorte que la première position de fin de course du piston 41 correspond à la position de repos. On comprendra que l'utilisation d'une vanne à siège incliné 4 de type normalement fermée permet notamment d'améliorer la sécurité et la fiabilité d'utilisation du système 1. On comprendra cependant que, selon des variantes non préférées, une vanne à siège incliné 4 de type normalement ouverte ou une vanne à siège incliné 4 commandée à la fois en ouverture et en fermeture à l'aide du fluide de commande pourrait également être utilisée. On comprendra aussi que dans ce dernier cas, la vanne de commande 7 doit également être choisie pour permettre de commander l'ouverture et la fermeture de la vanne à siège incliné 7.

La source de fluide de commande sous pression 5 est configurée pour délivrer du fluide de commande destiné à être délivré dans la chambre de commande 42 pour commander la valve à siège incliné 4. Le fluide de commande est de préférence de l'air. On comprendra cependant qu'en variante le fluide de commande pourrait être un autre fluide, par exemple de l'huile. La source de fluide de commande sous pression 5 peut par exemple être un compresseur, un accumulateur de pression, une ligne de fluide sous pression d'un bâtiment, par exemple une ligne d'air comprimé.

Le régulateur de pression 6 est raccordé de manière fluidique à la source de fluide de commande sous pression 5 et est configuré pour ajuster une pression du fluide de commande en aval de la source de fluide de commande sous pression 5. Le régulateur de pression 6 est de préférence un régulateur de pression 6 analogique, cela permet notamment un ajustement très précis et rapide de la pression du fluide de commande.

La vanne de commande 7 à trois voies et deux positions est raccordée de manière fluidique au régulateur de pression 6 et à la vanne à siège incliné 4. Une première voie 7a de la vanne de commande 7 est raccordée au régulateur de pression 6, une deuxième voie 7b de la vanne de commande 7 est raccordée à la chambre de commande 42 de la vanne à siège incliné 4 et une troisième voie 7c de la vanne de commande 7 est raccordée à une sortie de fluide de commande.

Selon le mode de réalisation représenté sur la Figure 1, la sortie de fluide de commande est une sortie à l'air ambiant, c'est-à-dire une sortie débouchant sur un environnement immédiat du système 1, à pression atmosphérique. On comprendra cependant que la sortie de fluide de commande peut également déboucher sur un réservoir de récupération de fluide de commande, par exemple si le fluide de commande est de l'huile.

On comprendra aussi qu'une première position de la vanne de commande 7 à trois voies et deux positions raccorde de manière fluidique la deuxième voie 7b à la troisième voie 7c, de telle sorte que du fluide de travail peut sortir de la chambre de commande 42 et passer par la sortie de fluide de commande, et qu'une seconde position de la vanne de commande 7 à trois voies et deux positions raccorde de manière fluidique la première voie 7a à la deuxième voie 7b, de telle sorte que du fluide de travail, en provenance du régulateur de pression 6, est introduit dans la chambre de commande 42. De préférence, la vanne de commande 7 à trois voies et deux positions est une vanne tout ou rien trois voies ou un distributeur 3/2. Ces types de vanne permettent notamment un fonctionnement du système 1 à des fréquences élevées.

On comprendra qu'une vanne tout ou rien trois voies peut, par exemple, être une vanne tout ou rien trois voies comprenant un servomoteur actionnant une tige comprenant un obturateur. On comprendra également que le distributeur 3/2 peut, par exemple, être choisi parmi un distributeur à commande électrique, un distributeur à commande électromagnétique, un distributeur électropneumatique et un distributeur à commande hydraulique. On comprendra aussi que dans le cas d'un distributeur à commande électromagnétique ou d'un distributeur à commande hydraulique, le dispositif de commande 8 comprend des moyens de commande électromagnétiques ou des moyens de commande hydrauliques configurés pour commander le distributeur 3/2.

Par ailleurs, la vanne de commande 7 à trois voies et deux positions est configurée pour commander un déplacement du piston 41 de la vanne à siège incliné 4 jusqu'à toute position entre la première position de fin de course et la seconde position de fin de course, incluses, à l'aide du fluide de commande ajusté en pression par le régulateur de pression 6.

On comprendra aussi qu'en fonction de la pression du fluide de commande délivré dans la chambre de commande 42 de la vanne à siège incliné 4 par la vanne de commande 7 à trois voies et deux positions, le piston 41 peut être positionné dans la première position de fin de course, dans la seconde position de fin de course ou dans toute position intermédiaire entre la première position de fin de course et la seconde position de fin de course. On comprendra aussi que, le cas échéant, du fluide de travail peut être évacué par la troisième voie 7c de la vanne de commande 7 pour obtenir la pression souhaitée dans la chambre de commande 42.

Le dispositif de commande 8 est configuré pour être connecté en liaison de communication avec le régulateur de pression 6 et la vanne de commande 7 à trois voies et deux positions.

Le dispositif de commande 8 est en outre configuré pour commander le régulateur de pression 6 en fonction d'amplitudes d'impulsion souhaitées pour les impulsions de fluide de travail, et pour commander la vanne de commande 7 à trois voies et deux positions en fonction de fréquences d'impulsion souhaitées pour les impulsions de fluide de travail, pour délivrer séquentiellement du fluide de commande à des pressions et à des fréquences données dans la chambre de commande 42 de la vanne à siège incliné 4, de manière à déplacer de manière proportionnelle le piston 41 de la vanne à siège incliné 4 et à générer des impulsions de fluide de travail pulsé. Le dispositif de commande peut par exemple comprendre un automate programmable, par exemple de type PID.

Selon le mode de réalisation représenté sur la Figure 1, le système 1 comprend en outre un capteur de pression 9 disposé au niveau de l'extrémité de sortie 2b de la canalisation 2. Le capteur de pression 9 est configuré pour mesurer une pression du fluide de travail au niveau de l'extrémité de sortie 2b et pour être connecté en liaison de communication avec le dispositif de commande 8. De plus, le système 1 est un système à rétroaction et le dispositif de commande 8 est configuré pour ajuster la commande du régulateur de pression 6 en fonction des mesures de pression reçues en provenance du capteur de pression 9.

Avantageusement, le dispositif de commande 8 comprend des moyens de mémoire et est en outre configuré pour réaliser un apprentissage automatique concernant la commande du régulateur de pression 6 en fonction des mesures de pression du capteur de pression 9, afin d'être apte à prédire une commande du régulateur de pression 6 plus précise pour une amplitude d'impulsion souhaitée. On comprendra que, en utilisation, ceci permet notamment de calibrer le système 1 et de prendre en compte des particularités, par exemple dimensionnelles, de l'installation, de manière à réduire un besoin de rétroaction une fois l'apprentissage automatique effectué. On comprendra aussi que cette configuration est particulièrement adaptée dans le cas où le système 1 est destiné à être vendu en kit et assemblé par un utilisateur, par exemple pour un montage en rattrapage sur une installation existante.

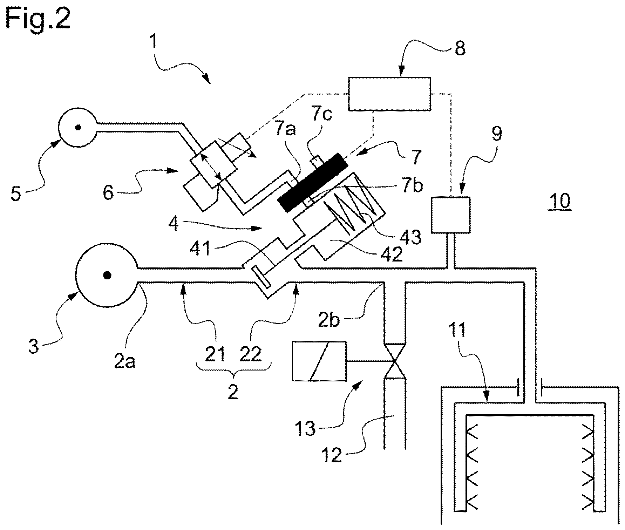

Si l'on se réfère maintenant à la Figure 2, on peut voir que l'on y a représenté une machine de lavage 10 selon l'invention.

La machine de lavage 10 comprend un système 1 selon l'invention, tel que décrit ci-avant, et une rampe de pulvérisation 11 raccordée de manière fluidique à l'extrémité de sortie 2b du système 1, de manière à être alimentée en fluide de travail pulsé.

La machine de lavage 10 comprend en outre une canalisation d'alimentation en solution lessivielle 12 configurée pour alimenter la rampe de pulvérisation 11 en solution lessivielle et une vanne de commande d'alimentation en solution lessivielle 13 configurée pour ouvrir et fermer la canalisation d'alimentation en solution lessivielle 12. On comprendra que la canalisation d'alimentation en solution lessivielle 12 peut, par exemple, être raccordée à un réservoir de solution lessivielle 12, éventuellement par l'intermédiaire d'une pompe, ou être raccordée à une ligne de solution lessivielle d'un bâtiment, par exemple une ligne d'alimentation en eau.

Comme indiqué ci-avant, en première position de fin de course, le piston 41 ferme complètement la canalisation 2 du système 1 de génération d'impulsions pour une alimentation en fluide de travail pulsé. On comprendra donc que la vanne à siège incliné 4 du système 1 est en outre configurée pour jouer le rôle de vanne de commande d'alimentation en fluide de travail dans la machine de lavage 10.

La machine de lavage 10 est ainsi configurée de telle sorte que la rampe de pulvérisation 11 peut être sélectivement alimentée en solution lessivielle, pour laver une pièce reçue en regard de la rampe de lavage 11, et en fluide de travail pulsé, pour éliminer de la solution lessivielle sur une surface de la pièce lavée.

Par rapport à une utilisation de fluide de travail sous pression délivré directement par la source de fluide de travail sous pression 3, l'utilisation de fluide de travail pulsé délivré par le système 1 permet de diminuer le temps nécessaire à l'élimination de la solution lessivielle à la surface de la pièce tout en réduisant la quantité de fluide de travail nécessaire à cette élimination.

Le système 1 selon l'invention permet donc, par exemple, de limiter une consommation d'air comprimé nécessaire pour un processus de séchage en permettant un soufflage d'air comprimé pulsé.

Pour des applications d'élimination de solution lessivielle à la surface d'une pièce, les séquences suivantes peuvent, par exemple, être utilisées : une succession d'impulsions de 1 seconde de pulvérisation de fluide de travail à la pression souhaitée espacées par des pauses de 0,8 seconde sans pulvérisation, ou une succession d'impulsions de 3 secondes de pulvérisation de fluide de travail à la pression souhaitée espacées par des pauses de 1 seconde sans pulvérisation.

Par ailleurs, les premières impulsions peuvent être réalisée à une première pression, afin de vider la solution lessivielle présente dans la rampe, puis la pression des impulsions peut être augmentée progressivement pour pousser la solution lessivielle à la surface de la pièce lavée et éviter de la pulvériser.

On comprendra que le dispositif de commande 8 du système 1 peut être configuré pour commander la vanne de commande d'alimentation en solution lessivielle 13 de la machine de lavage 10, ou que la machine de lavage 10 peut en outre comprendre des moyens de commande additionnels, en liaison de communication avec le dispositif de commande 8 du système 1, configurés pour commander la vanne de commande d'alimentation en solution lessivielle 13.

On comprendra qu'une machine de lavage 10 selon l'invention peut prendre différentes formes, par exemple une machine de lavage de pièces industrielles, par exemple pour laver des pièces industrielles après une opération d'usinage, ou encore une machine de lavage automatique de véhicules, par exemples de voitures.

Il est bien entendu que les modes de réalisation particuliers qui viennent d'être décrits ont été donné à titre indicatif et non limitatif, et que des modifications peuvent être apportées sans que l'on s'écarte pour autant du cadre de la présente invention.

## Revendications

1. - Système (1) de génération d'impulsions pour une alimentation en fluide de travail pulsé, le système (1) comprenant :
- une canalisation (2), comprenant une extrémité d'entrée (2a) et une extrémité de sortie (2b) par laquelle est délivré du fluide de travail pulsé ;
- une source de fluide de travail sous pression (3), raccordée de manière fluidique à l'extrémité d'entrée (2a) de la canalisation (2) ;
- une vanne à siège incliné (4), raccordée de manière fluidique sur la canalisation (2) entre l'extrémité d'entrée (2a) et l'extrémité de sortie (2b), la vanne à siège incliné (4) comprenant un piston (41) mobile entre une première position de fin de course, dans laquelle le piston (41) ferme complètement la canalisation (2), et une seconde position de fin de course, dans laquelle le piston (41) ouvre la canalisation (2) avec une ouverture maximale de la vanne à siège incliné (4) ;
- une source de fluide de commande sous pression (5) ;
- un régulateur de pression (6), raccordé de manière fluidique à la source de fluide de commande sous pression (5) et configuré pour ajuster une pression du fluide de commande ;
- une vanne de commande (7) à trois voies et deux positions, une première voie (7a) de la vanne de commande (7) est raccordée au régulateur de pression (6), une deuxième voie (7b) de la vanne de commande (7) est raccordée à la vanne à siège incliné (4) et une troisième voie (7c) de la vanne de commande (7) est raccordée à une sortie de fluide de commande, la vanne de commande (7) à trois voies et deux positions étant configurée pour commander un déplacement du piston (41) de la vanne à siège incliné (4) jusqu'à toute position entre la première position de fin de course et la seconde position de fin de course, incluses, à l'aide du fluide de commande ajusté en pression par le régulateur de pression (6) ; et
- un dispositif de commande (8) en liaison de communication avec le régulateur de pression (6) et la vanne de commande (7) à trois voies et deux positions, le dispositif de commande (8) étant configuré pour commander le régulateur de pression (6) en fonction d'amplitudes d'impulsion souhaitées et pour commander la vanne de commande (7) à trois voies et deux positions en fonction de fréquences d'impulsion souhaitées, de manière à déplacer de manière proportionnelle le piston (41) de la vanne à siège incliné (4) et à générer des impulsions de fluide de travail pulsé.

2. - Système (1) selon la revendication 1, **caractérisé par le fait que** la vanne de commande (7) à trois voies et deux positions est l'une parmi une vanne tout ou rien trois voies et un distributeur 3/2.

3. - Système (1) selon la revendication 1 ou la revendication 2, **caractérisé par le fait que** la vanne à siège incliné (4) est de type normalement fermée et est commandée en ouverture à l'aide du fluide de commande, de telle sorte que la première position de fin de course du piston (41) est une position de repos.

4. - Système (1) selon l'une quelconque des revendications 1 à 3, **caractérisé par le fait que** le système (1) comprend en outre un capteur de pression (9) disposé au niveau de l'extrémité de sortie (2b) de la canalisation (2), le capteur de pression (9) étant configuré pour mesurer une pression du fluide de travail et être en liaison de communication avec le dispositif de commande (8).

5. - Système (1) selon la revendication 4, **caractérisé par le fait que** le système (1) est un système (1) à rétroaction et le dispositif de commande (8) est configuré pour ajuster la commande du régulateur de pression (6) en fonction des mesures de pression reçues en provenance du capteur de pression (9).

6. - Système (1) selon la revendication 5, **caractérisé par le fait que** le dispositif de commande (8) comprend des moyens de mémoire et est en outre configuré pour réaliser un apprentissage automatique concernant la commande du régulateur de pression (6) en fonction des mesures de pression du capteur de pression (9), afin de, en utilisation, prédire une commande du régulateur de pression (6) plus précise pour une amplitude d'impulsion souhaitée.

7. - Système (1) selon l'une quelconque des revendications 1 à 6, **caractérisé par le fait que** le dispositif de commande (8) comprend un automate programmable.

8. - Système (1) selon l'une quelconque des revendications 1 à 7, **caractérisé par le fait que** le régulateur de pression (6) est un régulateur de pression (6) analogique.

9. - Système (1) selon l'une quelconque des revendications 1 à 8, **caractérisé par le fait qu'**au moins l'un parmi le fluide de travail et le fluide de commande est de l'air.

10. - Machine de lavage (10), **caractérisée par le fait que** la machine de lavage (10) comprend un système (1) selon l'une quelconque des revendications 1 à 9 et une rampe de pulvérisation (11) raccordée de manière fluidique à l'extrémité de sortie (2b) dudit système (1), de manière à être alimentée en fluide de travail pulsé.

## Patentansprüche

1. - System (1) zur Erzeugung von Impulsen zur Versorgung mit gepulstem Betriebsfluid, das System (1) umfassend:
- eine Rohrleitung (2), umfassend ein Einlassende (2a) und ein Auslassende (2b), durch das gepulstes Betriebsfluid zugeführt wird;
- eine Quelle für unter Druck stehendes Betriebsfluid (3), die fluidisch mit dem Einlassende (2a) der Rohrleitung (2) verbunden ist;
- ein Schrägsitzventil (4), das zwischen dem Einlassende (2a) und dem Auslassende (2b) fluidisch mit der Leitung (2) verbunden ist, wobei das Schrägsitzventil (4) einen Kolben (41) umfasst, der zwischen einer ersten Endposition, in der der Kolben (41) die Rohrleitung (2) vollständig verschließt, und einer zweiten Endposition, in der der Kolben (41) die Rohrleitung (2) mit einer maximalen Öffnung des Schrägsitzventils (4) öffnet, bewegbar ist;
- eine Quelle für unter Druck stehendes Steuerfluid (5);
- einen Druckregler (6), der fluidisch mit der Quelle des unter Druck stehenden Steuerfluids (5) verbunden und konfiguriert ist, um einen Druck des Steuerfluids einzustellen;
- ein Steuerventil (7) mit drei Wegen und zwei Stellungen, wobei ein erster Weg (7a) des Steuerventils (7) an den Druckregler (6) angeschlossen ist, ein zweiter Weg (7b) des Steuerventils (7) an das Schrägsitzventil (4) angeschlossen ist, und ein dritter Weg (7c) des Steuerventils (7) an einen Steuerfluidauslass angeschlossen ist, das Steuerventil (7) mit drei Wegen und zwei Stellungen konfiguriert ist, um eine Bewegung des Kolbens (41) des Schrägsitzventils (4) in eine beliebige Position zwischen der ersten Endposition und der zweiten Endposition, einschließlich, mittels des Steuerfluids zu steuern, dessen Druck durch den Druckregler (6) eingestellt wird; und
- eine Steuervorrichtung (8) in Kommunikationsverbindung mit dem Druckregler (6) und dem Steuerventil (7) mit drei Wegen und zwei Stellungen, wobei die Steuervorrichtung (8) konfiguriert ist, um den Druckregler (6) abhängig von gewünschten Impulsamplituden zu steuern und das Steuerventil (7) mit drei Wegen und zwei Stellungen abhängig von gewünschten Impulsfrequenzen zu steuern, um den Kolben (41) des Schrägsitzventils (4) proportional zu bewegen und Impulse eines gepulsten Betriebsfluids zu erzeugen.

2. - System (1) nach Anspruch 1, **dadurch gekennzeichnet, dass** das Steuerventil (7) mit drei Wegen und zwei Stellungen eines von einem Dreiwege-Ein/Aus-Ventil und einem 3/2-Verteiler ist.

3. - System (1) nach Anspruch 1 oder Anspruch 2, **dadurch gekennzeichnet, dass** das Schrägsitzventil (4) vom normalerweise geschlossenen Typ ist und mittels des Steuerfluids zum Öffnen gesteuert wird, sodass die erste Endposition des Kolbens (41) eine Ruheposition ist.

4. - System (1) nach einem der Ansprüche 1 bis 3, **dadurch gekennzeichnet, dass** das System (1) ferner einen Drucksensor (9) umfasst, der auf Höhe des Auslassendes (2b) der Rohrleitung (2) angeordnet ist, wobei der Drucksensor (9) konfiguriert ist, um einen Druck des Betriebsfluids zu messen und in Kommunikationsverbindung mit der Steuervorrichtung (8) zu sein.

5. - System (1) nach Anspruch 4, **dadurch gekennzeichnet, dass** das System (1) ein Rückkopplungssystem (1) ist und die Steuervorrichtung (8) konfiguriert ist, um die Steuerung des Druckreglers (6) abhängig von den von dem Drucksensor (9) empfangenen Druckmessungen einzustellen.

6. - System (1) nach Anspruch 5, **dadurch gekennzeichnet, dass** die Steuervorrichtung (8) Speichereinrichtungen umfasst und ferner konfiguriert ist, um ein automatisches Lernen hinsichtlich der Steuerung des Druckreglers (6) abhängig von Druckmessungen des Drucksensors (9) durchzuführen, um im Gebrauch eine genauere Steuerung des Druckreglers (6) für eine gewünschte Impulsamplitude vorherzusagen.

7. - System (1) nach einem der Ansprüche 1 bis 6, **dadurch gekennzeichnet, dass** die Steuervorrichtung (8) eine speicherprogrammierbare Steuerung umfasst.

8. - System (1) nach einem der Ansprüche 1 bis 7, **dadurch gekennzeichnet, dass** der Druckregler (6) ein analoger Druckregler (6) ist.

9. - System (1) nach einem der Ansprüche 1 bis 8, **dadurch gekennzeichnet, dass** mindestens eines von dem Betriebsfluid und dem Steuerfluid Luft ist.

10. - Waschmaschine (10), **dadurch gekennzeichnet, dass** die Waschmaschine (10) ein System (1) nach einem der Ansprüche 1 bis 9 und eine Sprühleiste (11), die fluidisch mit dem Auslassende (2b) des Systems (1) verbunden ist, um mit einem gepulsten Betriebsfluid versorgt zu werden, umfasst.

## Claims

1. - A pulse generating system (1) for a pulsed working fluid supply, the system (1) comprising:
- a pipe (2), comprising an inlet end (2a) and an outlet end (2b) through which pulsed working fluid is delivered;
- a source (3) of pressurized working fluid, fluidly connected to the inlet end (2a) of the pipe (2);
- an angle-seat valve (4), fluidly connected to the pipe (2) between the inlet end (2a) and the outlet end (2b), the angle-seat valve (4) comprising a piston (41) movable between a first end-of-stroke position, in which the piston (41) completely closes the pipe (2), and a second end-of-stroke position, in which the piston (41) opens the pipe (2) with a maximum opening of the angle-seat valve (4);
- a source (5) of pressurized control fluid;
- a pressure regulator (6), fluidly connected to the source (5) of pressurized control fluid and configured to regulate a pressure of the control fluid;
- a three-port, two-position control valve (7), a first port (7a) of the control valve (7) is connected to the pressure regulator (6), a second port (7b) of the control valve (7) is connected to the angle-seat valve (4) and a third port (7c) of the control valve (7) is connected to a control fluid outlet, the three-port, two-position control valve (7) being configured to control displacement of the piston (41) of the angle-seat valve (4) to any position between the first end-of-stroke position and the second end-of-stroke position, including the first end-of-stroke position and the second end-of-stroke position, by means of the control fluid, the pressure of the control fluid being regulated by the pressure regulator (6); and
- a control device (8) in communication with the pressure regulator (6) and the three-port, two-position control valve (7), the control device (8) being configured to control the pressure regulator (6) as a function of desired pulse amplitudes and to control the three-port, two-position control valve (7) as a function of desired pulse frequencies, so as to proportionally displace the piston (41) of the angle-seat valve (4) and generate pulses of pulsed working fluid.

2. - System (1) according to claim 1, **characterized in that** the three-port, two-position control valve (7) is one from among a three-port on/off valve and a 3/2 distribution valve.

3. - System (1) according to claim 1 or claim 2, **characterized in that** the angle-seat valve (4) is of the normally closed type and is controlled in opening by means of the control fluid, in such a way that the first end-of-stroke position of the piston (41) is a rest position.

4. - System (1) according to any one of claims 1 to 3, **characterized in that** the system (1) further comprises a pressure sensor (9) arranged at the outlet end (2b) of the pipe (2), the pressure sensor (9) being configured to measure a pressure of the working fluid and to be in communication with the control device (8).

5. - System (1) according to claim 4, **characterized in that** the system (1) is a feedback system (1), and the control device (8) is configured to regulate the control of the pressure regulator (6) as a function of the pressure measurements received from the pressure sensor (9).

6. - System (1) according to claim 5, **characterized in that** the control device (8) comprises memory means and is further configured to perform automatic learning, concerning the control of the pressure regulator (6) as a function of the pressure measurements from the pressure sensor (9), in order to, in use, predict a more accurate control of the pressure regulator (6) for a desired pulse amplitude.

7. - System (1) according to any one of claims 1 to 6, **characterized in that** the control device (8) comprises a programmable logic controller (PLC).

8. - System (1) according to any one of claims 1 to 7, **characterized in that** the pressure regulator (6) is an analog pressure regulator (6).

9. - System (1) according to any one of claims 1 to 8, **characterized in that** at least one from among the working fluid and the control fluid is air.

10. - A washing machine (10), **characterized in that** the washing machine (10) comprises a system (1) according to any one of claims 1 to 9 and a spray bar (11) fluidly connected to the outlet end (2b) of the system (1), so as to be supplied with pulsed working fluid.
